(19) Europäisches Patentamt
European Patent Office
Office européen des brevets

(11) Publication number: **0 268 955 A2**

(12) # EUROPEAN PATENT APPLICATION

(21) Application number: 87116791.2

(22) Date of filing: 13.11.87

(51) Int. Cl.[4]: C08G 81/00, C08L 71/04, C08L 77/00, //(C08L71/04,77:00),(C08L77/00-,71:04)

(30) Priority: 14.11.86 JP 271013/86
14.11.86 JP 271015/86

(43) Date of publication of application:
01.06.88 Bulletin 88/22

(84) Designated Contracting States:
DE FR GB IT NL

(71) Applicant: MITSUBISHI PETROCHEMICAL CO., LTD.
5-2, 2-chome, Marunouchi
Chiyoda-ku Tokyo 100(JP)

(72) Inventor: Inoue, Takayuki
c/o Mitsubishi Petrochemical Co. Ltd. 1, Toho-cho
Yokkaichi-shi Mie(JP)
Inventor: Takahashi, Hiroshi
c/o Mitsubishi Petrochemical Co. Ltd. 1, Toho-cho
Yokkaichi-shi Mie(JP)
Inventor: Kihira, Michiharu
c/o Mitsubishi Petrochemical Co. Ltd. 1, Toho-cho
Yokkaichi-shi Mie(JP)
Inventor: Yamauchi, Shin-ichi
c/o Mitsubishi Petrochemical Co. Ltd. 1, Toho-cho
Yokkaichi-shi Mie(JP)
Inventor: Mayumi, Junji
c/o Mitsubishi Petrochemical Co. Ltd. 1, Toho-cho
Yokkaichi-shi Mie(JP)
Inventor: Goto, Teruhisa
c/o Mitsubishi Petrochemical Co. Ltd. 1, Toho-cho
Yokkaichi-shi Mie(JP)

(74) Representative: Hansen, Bernd, Dr.rer.nat. et al
Hoffmann, Eitle & Partner Patentanwälte
Arabellastrasse 4
D-8000 München 81(DE)

(54) **Polyphenylene ether.polyamide copolymer-containing resin composition.**

(57) A resin composition containing a polyphenylene ether•polyamide copolymer obtained by reacting an epoxidized polyphenylene ether and a polyamide is described.

EP 0 268 955 A2

Also, another resin composition containing the aforesaid polyphenylene ether•polyamide copolymer further added with polyphenylene ether and polyamide is described.

These compositions are excellent in water absorption resistance, solvent resistance, and dimensional stability.

# POLYPHENYLENE ETHER•POLYAMIDE COPOLYMER-CONTAINING RESIN COMPOSITION

## FIELD OF THE INVENTION

This invention relates to a resin composition containing a polyphenylene ether•polyamide copolymer obtained by reacting an epoxidized polyphenylene ether and a polyamide (hereinafter referred to as "the polyphenylene ether•polyamide copolymer"). The polyphenylene ether•polyamide copolymer itself is an excellent molding material having improved water absorption resistance and causing less warpage and shrink mark as well as the polyphenylene ether•polyamide copolymer can provide a resin composition having improved solvent resistance, dimensional stability, and water absorption resistance by compounding therewith a polyphenylene ether and a polyamide

## BACKGROUND OF THE INVENTION

A polyphenylene ether has high heat resistance and is excellent in strength, electric characteristics, and dimensional preciseness but since a polyphenylene ether is liable to be corroded by solvents, e g., aromatic hydrocarbons such as benzene, etc., and halogenated hydrocarbons such as trichlene, etc., and also is poor in moldability, it is difficult to form molded articles of itself.

For improving the moldability of a polyphenylene ether, a method of diluting it with a polystyrene-series resin is proposed but although the moldability thereof is improved, the solvent resistance of a polyphenylene ether cannot be improved by the addition of a polystyrene-series resin since a polystyrene-series resin itself is also corroded by aromatic hydrocarbons such as benzene, etc., and halogenated hydrocarbons such as trichlene, etc.

For improving the moldability and also the solvent resistance of a polyphenylene ether, it may be considered to add a polyamide-series resin but even when a polyphenylene ether is mixed with a polyamide, they are not uniformly dispersed to form large particle size portions, which results in reducing the mechanical strength to an extent of making the resin mixture unsuitable for practical use.

## SUMMARY OF THE INVENTION

As the result of various investigations for solving the above-described problems taking into consideration of that a polyphenylene ether and a polyamide can be uniformly and finely dispersed by compounding a copolymer of a polyphenylene ether and polyamide, the inventors have accomplished the present invention.

That is, the invention provides a resin composition containing a polyphenylene ether•polyamide copolymer prepared by reacting an epoxidized polyphenylene ether, preferably a terminal-epoxidized polyphenylene ether and a polyamide.

The resin composition containing such a polyphenylene ether•polyamide copolymer has improved moldability and solvent resistance without much reducing the heat resistance, strength, electric characteristics, etc., which are the features of polyphenylene ether and gives molded articles having improved water absorption resistance (antihygroscopic property) and showing less warpage and shrink mark, the inferiority of these properties being the faults of polyamide.

The invention further provides a resin composition containing the aforesaid polyphenylene ether polyamide copolymer further added with polyphenylene•ether and polyamide.

The resin composition also has improved moldability and solvent resistance without much reducing the heat resistance, strength, electric characteristics, etc., which are the features of the polyphenylene ether and gives molded articles having improved water absorption resistance (antihygroscopic property) and showing less warpage and shrink mark, the inferiority of these properties being the faults of polyamide.

## BRIEF DESCRIPTION OF THE DRAWING

Drawing is a graph showing an infrared absorption spectrum of the polyphenylene ether•polyamide copolymer prepared in Example 1.

DETAILED DESCRIPTION OF THE INVENTION

Then, the invention is explained in detail.

Polyphenylene Ether

The polyphenylene ether which is used for obtaining the polyphenylene ether•polyamide copolymer in this invention is a homopolymer or copolymer obtained by subjecting at least one monocyclic phenol represented by the following formula (I) and includes a graft copolymer formed by grafting a vinyl aromatic compound into the skeleton of polyphenylene ether;

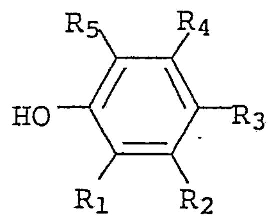

(I)

wherein $R_1$, $R_2$, $R_3$, $R_4$, and $R_5$ each represents a hydrogen, a halogenated hydrocarbon group, a hydrocarbon group, or a substituted hydrocarbon group.

Specific examples of the monocyclic phenol compound represented by the formula (I) described above are 2,6-dimethylphenol, 2,6-diphenylphenol, 2,3,6-trimethylphenol, 2,6-diisopropylphenol, 2-methyl-6-isopropyl phenol, 2-methyl-6-t-butylphenol, etc. For the monocyclic phenol compound, cresol, 2,4,6-trimethylphenol, etc., can be used as a small part of the copolymer components thereof.

Specific examples of the graft copolymer are graft copolymer formed by grafting a small amount of a styrene-series polymer as a vinyl aromatic compound to polyphenylene ether, etc.

The polyphenylene ether for use as a raw material for epoxidized polyphenylene which is used in this invention can be prepared by known methods as described, e.g., in U.S. Patents 3,306,874, 3,306,875, 3,257,357, 3,257,358, etc.

The polyphenylene ether for use in this invention is a resin having an intrinsic viscosity (measured in chloroform at 30°C) in the range of from 0.10 to 0.60, preferably from 0.20 to 0.57, and particularly preferably from 0.25 to 0.55. If the intrinsic viscosity is less than 0.10, the resin loses the features as polyphenylene ether after forming a copolymer thereof with polyamide, which is against the purport of this invention. Also, if the intrinsic viscosity is over 0.60, even if a copolymer thereof with polyamide is formed, kneading, granulation, and molding of the polyphenylene ether•polyamide copolymer are too difficult to use for practical purposes.

Production Method of Polyphenylene Ether Having Epoxy Group

The polyphenylene ether having an epoxy group is a polyphenylene ether having introduced therein an epoxy group and in this case, it is preferred to epoxidize the terminal of the polyphenylene ether.

The epoxidized polyphenylene ether can be obtained by contacting a polyphenylene ether with a compound having epoxy group under heating. It is preferred for the reaction to utilize a condensation reaction of a polyphenylene ether and an epoxy compound having halogen, etc., which can react with the hydroxy group of the polyphenylene ether.

The practical production method is as follows. When the compound having epoxy group is liquid in the reaction temperature and also can dissolve therein a polyphenylene ether, the compound having epoxy group can be used as a reaction component and solvent for the reaction. Also, when the compound having epoxy group is solid at the reaction temperature or does not dissolve a polyphenylene ether, a solvent which is good solvent for both the polyphenylene ether and the epoxy compound and does not take part in the reaction, for example, an aromatic hydrocarbon such as benzene, toluene, etc., or a halogenated hydrocarbon such as chloroform, etc., is used.

As the compound having epoxy group, an epoxy compound having one halogenated terminal or a both terminal-epoxidized compound can be preferably used.

Specific examples of the one terminal-epoxidized compound are epichlorohydrin, 2-methylepichlorohydrin, etc., and specific examples of the both terminal-epoxidized compound are 2,2-bis(4-glycidylphenyl ether)propane, an epoxy resin, etc. In this invention, the one terminal-epoxidized compound is particularly preferred from the view point of restraining the occurrence of blocking of polyphenylene ethers each other.

As to the ratio of the compound having epoxy group, which is used for the epoxidation, and a polyphenylene ether, the amount of the epoxy group is preferably at least 1.0 mol, and more preferably at least 1.5 mol per mol of the phenol group of the polyphenylene ether.

For accelerating the reaction, an alkali compound can be used. There is no particular restriction on the alkali compound but sodium hydroxide, potassium hydroxide, etc., are suitable. The addition amount thereof is at least 1.0 equivalent, preferably at least 1.2 equivalent, and particularly preferably at least 1.5 equivalent with respect to the epoxy group. The alkali compound is added to the reaction system as an aqueous solution thereof but for accelerating the reaction, it is important to reduce the content of water in the reaction system and hence it is desired that the alkali compound is dissolved in water at a concentration as high as possible.

The reaction temperature is preferably in the range of about 80°C to 120°C and the reaction time is usually from one hour to 6 hours. Also, it is possible to shorten the reaction time by increasing the temperature above 100°C during the reaction, reducing the pressure in the reaction system, or removing water in the reaction system by bubbling with nitrogen gas, etc.

After the reaction is over, the system is cooled and when the system reaches about ordinary temperature, a solvent which does not dissolve polyphenylene ether, such as cold methanol, etc., is added to the reaction system to form precipitates and thus an epoxidized polyphenylene ether is obtained.

Thereafter, the precipitates thus formed are collected by filtration and then washed with water and methanol to remove unreacted epoxy compound and alkali compound. Thereafter, the precipitates are collected by filtrated and dried at 100°C to 150°C under reduced pressure or atmospheric pressure to provide an epoxidized polyphenylene ether.

Determination of Epoxidized Polyphenylene Ether

The introduced ratio of epoxy group into a polyphenylene ether can be calculated by determining the unreacted phenol groups of the polyphenylene ether by an ultraviolet absorption spectral method. Practically, the product is dissolved in a halogenated hydrocarbon such as dichloromethane, an aminic basic solution is added dropwise to the solution to dissociate the phenolic hydroxy group into a phenoxy anion, and the anion is measured from the absorption intensity using wavelength of 320 mμ. The epoxidation ratio of the phenol group is at least 45 mol%, preferably at least 60 mol%, and more preferably at least 80 mol% of the phenol group.

Polyamide

As the polyamide which is used for obtaining the polyphenylene ether•polyamide copolymer in this invention, there are polycaproamide(nylon-6), polyhexamethyleneadipamide(nylon-6,6), polyhexamethylenesebacamide(nylon-6,10), polyhexamethylenedodecamide(nylon-6,12), polyundecaneamide(nylon-11), polydodecaneamide(nylon-12), and copolymerized polyamides and condensed polyamides containing the aforesaid polyamide as the main component.

As the polyamide which reacts with a polyphenylene ether under melt-kneading, polycaproamide(nylon-6) and polyhexamethyleneadipamide(nylon-6,6) are particularly preferred from the view point of heat resistance and mechanical properties.

The polyamide which is used for obtaining the above-described polyphenylene ether•polyamide copolymer in this invention is a resin having a relative viscosity (using 98% sulfuric acid solution regulated by JIS K-6810) of from 1.5 to 6.5, preferably from 1.8 to 6.0, and more preferably from 2.0 to 5.5. If the relative viscosity is less than 1.5, the resin loses the features as polyamide after forming a copolymer thereof with a polyphenylene ether, which is against the purport of this invention. Also, if the relative viscosity is over 6.5, even if a copolymer thereof with polyphenylene ether is formed, kneading, granulation, and molding of the polyphenylene ether•polyamide copolymer are too difficult to use practically.

Reaction of Epoxidized Polyphenylene Ether and Polyamide

The reaction of the epoxidized polyphenylene ether and polyamide is performed in molten state. As a means for reacting these components in molten state, a kneading means for plastics, such as a laboplastomill, a screw extruder, a roll kneading machine, a Banbury type kneading machine, etc., can be generally used. The reaction temperature is a temperature at which polyphenylene ether and polyamide can be sufficiently molten and kneaded, e.g., a temperature of from 240°C to 350°C, preferably from 250°C to 330°C, and particularly preferably from 260°C to 310°C. If the reaction temperature is less than 200°C, polyamide is reluctant to melt and the polymer formed gels, which is unsuitable for the objects of this invention.

As to the compounding ratio of the epoxidized polyphenylene ether and polyamide, the amino groups of free groups existing in the polyamide calculated from the number average molecular weight of the polyamide is preferably in the range of from 0.5 mol to 1.5 mol, and particularly preferably from 0.8 mol to 1.2 mol per mol of the epoxy group of the polyphenylene ether determined by a ultraviolet absorption spectral method.

The product is obtained as a mixture containing the unreacted raw materials and in the case of using the product as an additive for various resins, the mixture can be directly used as it is.

In the case of separating unreacted polyphenylene ether from the reaction mixture, the unreacted polyphenylene ether is extracted off by using a solvent which dissolves the polyphenylene ether but does not dissolve the polyamide, for example, a halogenated hydrocarbon such as chloroform, etc., and an aromatic hydrocarbon such as xylene, etc. In particular, it is preferred to extract the unreacted polyphenylene ether using an aromatic hydrocarbon such as xylene at a boiling point of the solvent.

The polyphenylene ether•polyamide copolymer in this invention contains a copolymer of a structure that the polyphenylene ether and the polyamide are bonded to each other by an epoxy compound, such as the structure represented by the following formula (II), (III), (IV) or V:

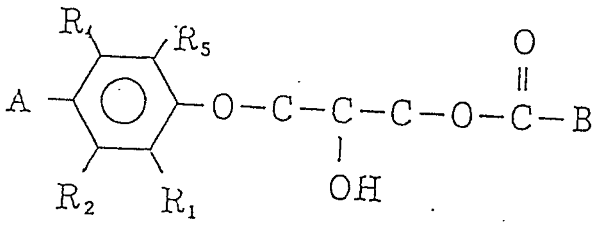

(II)

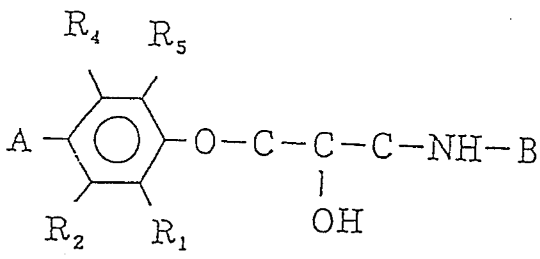

(III)

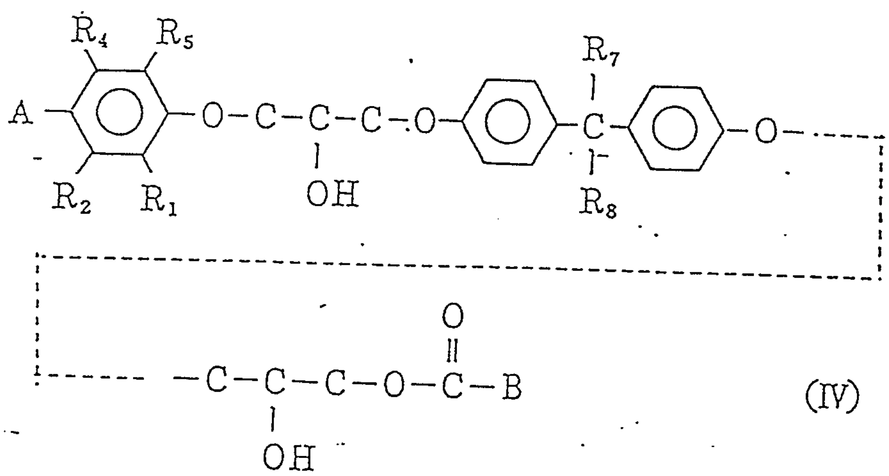

(IV)

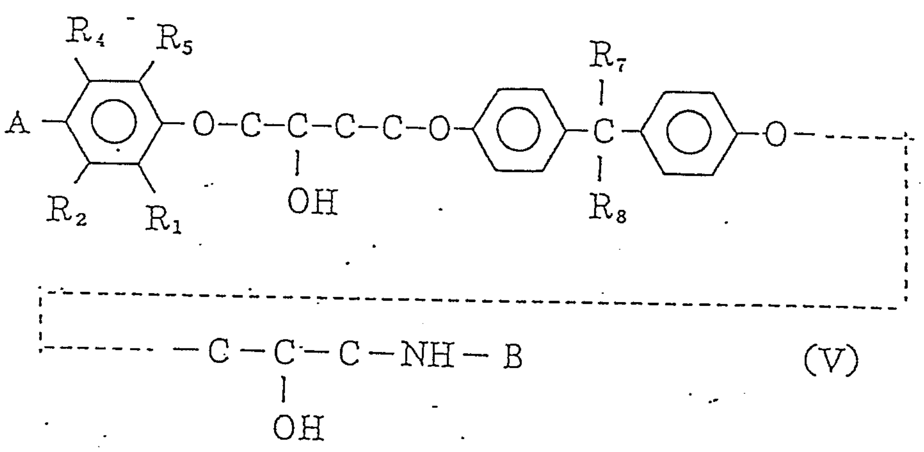

(V)

wherein $R_1$ to $R_5$ each means the same substituent as described above in the formula (I); $R_7$ and $R_8$ each represents a hydrogen atom or an alkyl group having from 1 to 3 carbon atoms; A represents a polyphenylene ether; and B represents a polyamide.

Usually, the copolymers represented by the formula (II) or (III) or the copolymers represented by the formula (IV) or (V) are obtained as a mixture thereof.

Addition of Resins to Polyphenylene Ether•Polyamide Copolymer

The copolymer of polyphenylene ether having epoxy group and polyamide obtained by the above-described reaction can be used for the production of molded articles by itself or further the objects of this invention can be attained by adding polyphenylene ether and polyamide to the aforesaid polyphenylene ether•polyamide copolymer.

In this case, as a polyphenylene ether being added, the polyphenylene ether which is used for the aforesaid epoxidation can be, in principle, used although the preferred range of the molecular weight differs a little. That is, the intrinsic viscosity of the polyphenylene ether (measured at 30°C using chloroform as the solvent) is in the range of from 0.15 to 0.65, and particularly preferably from 0.30 to 0.60. If the intrinsic viscosity thereof is less than 0.15, the composition obtained becomes brittle and the mechanical strength thereof is undesirably reduced. Also, if the intrinsic viscosity is over 0.65, the difference in viscosity between the polyphenylene ether and polyamide is too large to disperse well them, whereby the objects of this invention cannot be obtained.

Also, as the polyamide which is added to the aforesaid polyphenylene ether•polyamide copolymer in this invention, there are polycaproamide(nylon-6), polyhexamethyleneadipamide(nylon-6,6), polyhexamethylenesebacamide(nylon-6,10), polyhexamethylenedodecamide(nylon-6,12), polyundecaneamide(nylon-11), polydodecanamide (nylon-12), and the copolymerized polyamides and condensed polyamides containing the aforesaid polyamides as the main components.

The polyamide is a resin having a relative viscosity (measured using a 98% sulfuric acid solution regulated by JIS K-6810) of from 1.5 to 6.5, preferably from 1.8 to 6.0, and particularly preferably from 2.0 to 5.5. If the relative viscosity thereof is less than 1.5, the composition obtained becomes brittle and the mechanical strength thereof is undesirably reduced. Also, if the relative viscosity is over 6.5, the molten viscosity of the polyamide is too high to obtain good dispersion after kneading.

The compounding ratios of the aforesaid polyphenylene ether•polyamide copolymer, a polyphenylene ether and a polyamide are as follows. That is, the proportion of the polyphenyl ether•polyamide copolymer is from 2 to 80 parts by weight, preferably from 5 to 75 parts by weight, and more particularly from 8 to 70 parts by weight, the proportion of the polyphenylene ether and/or the polyphenylene ether having epoxy group left without being reacted in the reaction for forming the aforesaid polyphenylene ether•polyamide copolymer is from 10 to 80 parts by weight, preferably from 15 to 75 parts by weight, and more preferably from 20 to 70 parts by weight, and the proportion of the polyamide is from 10 to 80 parts by weight, preferably from 15 to 75 parts by weight, and more preferably from 20 to 70 parts by weight, each per 100 parts by weight of the total amount of the polyphenylene ether•polyamide copolymer, the polyphenylene ether and/or the polyphenylene ether having epoxy group and the polyamide.

If the proportion of the polyphenylene ether polyamide copolymer is less than 2 parts by weight, per 100 parts by weight of the total amount of the polyphenylene ether•polyamide copolymer, the polyphenylene ether and/or the polyphenylene ether having epoxy group and the polyamide, a good uniform and fine dispersion of polyphenylene ether and polyamide is not obtained.

The composition of this invention may further contain various additives, e.g., an antioxidant, an ultraviolet ray absorbent, a plasticizer, a lubricant, a flame retarder, a flame retarder assistant, an antistatic agent, a conductivity imparting agent, a coloring agent, a multifunctional crosslinking agent, a fibrous reinforcing agent such as glass fibers, etc., an impact resistance improving agent such as rubber, etc., according to the purposes.

For producing the composition of this invention, an optional method capable of melt-kneading the components can be used without any particular restriction. For example, an extruder, a roll mill, a Banbury mixer, a Brabender, etc., can be used.

The temperature is a temperature capable of sufficiently melting and kneading a polyphenylene ether and polyamide, for example, a temperature of from 240°C to 350°C, preferably from 250°C to 330°C, and more preferably from 260°C to 310°C. If the temperature is less than 200°C, the polyamide is reluctant to melt, and if the temperature is over 350°C, the epoxy groups of the polyphenylene ethers react with each other and the polymer formed gels, which is unsuitable for the objects of this invention.

This invention will be explained in greater detail with reference to the following examples, but this invention should not be construed as being limited thereto.

A polyphenylene•polyamide copolymer was prepared and the evaluation of the properties thereof were performed.

First, epoxidized polyphenylene ethers were previously prepared in following Production Examples 1 to 4, then, polyphenylene ether•polyamide copolymers were prepared from the epoxidized polyphenylene

ethers and polyamide in Examples 1 to 5, and the properties of the polyphenylene ether•polyamide copolymers were evaluated. Separately, polymer blends were prepared from a terminal unepoxidized polyphenylene ether and polyamide in Comparison Examples 1 and 2, and the properties thereof were evaluated.

Production Example 1 (Preparation of Epoxidized Polyphenylene Ether)

In a dry flask were placed 100 parts by weight of polyphenylene ether having an intrinsic viscosity (measured in the chloroform solution at 30°C) of 0.29, made by Mitsubishi Petrochemical Company, Ltd., and 1,500 parts by weight of epichlorohydrin and the polyphenylene ether was dissolved in epichlorohydrin. Then, after adding a solution of 5 parts by weight of sodium hydroxide dissolved in 10 parts by weight of water to the solution, the temperature of the system was raised to 100°C with stirring and the reaction was performed for 4 hours. Then, the reaction mixture was cooled to room temperature, methanol at a volume of twice the volume of epichlorohydrin was added to the reaction mixture to deposit a polymer, and then the polymer was collected by filtration, washed in succession with methanol, water, and then methanol, and dried for 8 hours at 150°C under reduced pressure. When the unreacted phenol terminal group was determined by an ultraviolet absorption spectral method, it was confirmed that an epoxy group had been introduced in 84% phenol terminal group. The yield for the polymer was 92% and the polymer thus obtained was defined as Polymer (A).

Production Example 2 (Preparation of Epoxidized Polyphenylene Ether)

By following the same procedure as Production Example 1 except that the intrinsic viscosity of the polyphenylene ether was changed from 0.29 to 0.50, Polymer (B) was obtained. The yield for the polymer was 95% and the introduction ratio of epoxy group was 87%.

Production Example 3 (Preparation of Epoxidized Polyphenylene Ether)

By following the same procedure as Production Example 1 except that the amount of epichlorohydrin was reduced from 1,500 parts by weight to 300 parts by weight and 1,200 parts by weight of toluene was added instead, Polymer (C) was obtained. The yield for the polymer was 87% and the introduced ratio of epoxy group was 66%.

Production Example 4 (Preparation of Epoxidized Polyphenylene Ether)

By following the same procedure as Production Example 3 except that the intrinsic viscosity of the polyphenylene ether was changed from 0.29 to 0.50, Polymer (D) was obtained. The yield for the polymer was 89% and the introduced ratio of epoxy group was 74%.

Examples 1 to 5 (Preparation of Polyphenylene Ether•Polyamide Copolymers) and Comparison Examples 1 and 2

Each of the terminal epoxidized polyphenylene ethers (Polymers (A) to (D)) described in Production Examples 1 to 4 or a terminal unepoxidized polyphenylene ether (PPE) and nylon-6 or nylon-6,6 (made by BASF AG) having the relative viscosity (measured by using 98% sulfuric acid solution regulated by JIS K-6810) as shown in Table 1 described below were placed in a Brabender set to 280°C in the amounts shown in Table 1 and the mixture was preheated for 2 minutes at 280°C and then melt-kneaded for 4 minutes.

A part of the product was sampled, the dispersed particle sizes thereof were measured by a scanning type electron microscope of 2,000 magnification, and MFR by a load of 5 kg at 280°C was measured. Also, a part of a press sheet of each product was immersed in benzene at ordinary temperature for one hour and then the surface state thereof was observed. Furthermore, the Izod impact strength (ISO R180-1969 (JIS K-7110)) was measured. The results obtained are shown in Table 1 below. Also, the infrared absorption spectrum of the reaction product in Example 1 is shown in the drawing.

TABLE 1

| | Polyphenylene Ether | | | | Polyamide | | | | Dispersed Particle Size | MFR | Solvent***) Resistance (Benzene) | Izod Impact Strength |
|---|---|---|---|---|---|---|---|---|---|---|---|---|
| | Kind | Intrinsic Viscosity | MN**) | Composition (wt%) | Kind | Relative Viscosity | MN**) | Composition (wt%) | (μ) | (g/10 min.) | | (kg·cm/cm) |
| Example 1 | Polymer (A) | 0.29 | 7,400 | 35 | Nylon-6 | 2.5 | 15,000 | 65 | 0.2-1 | 123 | ○ | 10.5 |
| " 2 | " (B) | 0.50 | 14,000 | 50 | " | " | " | 50 | 0.3-2 | 84 | ○ | 6.5 |
| " 3 | " (C) | 0.29 | 7,400 | 43 | " | " | " | 57 | 0.3-1 | 105 | ○ | 8.7 |
| " 4 | " (D) | 0.50 | 14,000 | 56 | " | " | " | 44 | 0.3-3 | 44 | ○ | 5.8 |
| " 5 | " (A) | 0.29 | 7,400 | 31 | Nylon-6,6 | 2.8 | 18,000 | 69 | 0.2-1 | 230 | ○ | 6.3 |
| Comparison Example 1 | PPE*) | 0.50 | 14,000 | 60 | Nylon-6 | 2.5 | 15,000 | 40 | 2-6 | 61 | ○ | 3.5 |
| " 2 | " | 0.50 | 14,000 | 60 | Nylon-6,6 | 2.8 | 18,000 | 40 | 2-8 | 70 | ○ | 3.1 |

*): PPE Terminal Unepoxidized Polyphenylene Ether

**): MN Number Average Molecular Weight

***): ○ Surface State Unchanged

Resin compositions were prepared using the polyphenylene ether polyamide copolymers previously prepared and other polymers or using only the other polymers and the properties of the resin compositions obtained were evaluated.

First, polyphenylene ether•polyamide copolymers were prepared in Production Examples 5 and 6. then desired resin compositions were prepared using these polyphenylene ether•polyamide copolymers and the other polymers in Examples 6 to 10, or comparison resin compositions were prepared using only the other polymers in Comparison Examples 3 to 5, and the properties of these resin compositions were evaluated.

Production Example 5 (Preparation of Polyphenylene Ether•Polyamide Copolymer)

After mixing 100 parts by weight of the epoxidized polyphenylene ether (Polymer (A) prepared in Production Example 1 described above and 100 parts by weight of nylon-6 (made by BASF AG) as polyamide, the mixture was preheated in a Brabender set to 280°C for 2 minutes and melt-kneaded for 4 minutes. Thereafter, the product was dispersed in xylene, the dispersion was stirred at a boiling point for one hour under refluxing, and after removing unreacted polyphenylene ether and terminal epoxidized polyphenylene ether, the residue was dried for 8 hours at 150°C under reduced pressure to provide Copolymer (E).

Production Example 6 (Preparation of Polyphenylene Ether•Polyamide Copolymer)

By following the same procedure as Production Example 5 except that the intrinsic viscosity of the polyphenylene ether used for preparing the epoxidized polyphenylene ether was changed from 0.29 to 0.50 and the amount of nylon-6 was changed from 100 parts by weight to 60 parts by weight, Copolymer (F) was prepared.

Examples 6 to 10 and Comparison Examples 3 to 5 (Preparation of Resin Compositions)

In a Brabender set to 280°C were placed the polymers selected from the polyphenylene ether having the intrinsic viscosity (measured in chloroform solution at 30°C) as shown in Table 2 (made by Mitsubishi Petrochemical Company, Ltd.), Nylon-6,6 or Nylon-6 having the relative viscosity (measured using 98% sulfuric acid solution regulated by JIS K-6810) as shown in Table 2 (made by BASF AG) as polyamide, and Copolymer (E) or (F) prepared in Production Example 5 or 6, in the amounts shown in Table 2, and the mixture was preheated for 2 minutes and melt-kneaded for 4 minutes.

A part of each blend thus obtained was sampled and the dispersion state was measured by means of a scanning electron microscope of 2,000 magnification. Also, a sheet of 3.2 mm in thickness was formed by press molding each blend, a sample piece was formed therefrom by cutting, and the Izod impact strength of each test piece was measured.

Also, the test piece was immersed in benzene for one hour at ordinary temperature and then the surface state was observed. The results obtained are shown in Table 2.

TABLE 2

| | Polyphenylene Ether | | Polyamide | | | EX-PPE/PA*) | | Dispersed Particle Size | Izod Impact Strength | Solvent**) Resist-ance (Benzene) | MFR |
|---|---|---|---|---|---|---|---|---|---|---|---|
| | Intrinsic Viscosity | Composi-tion (wt%) | Kind | Relative Viscosity | Composi-tion (wt%) | Kind | Composi-tion (wt%) | (μ) | (kg·cm/cm) | | (g/10 min.) |
| Example 6 | 0.50 | 54 | Nylon-6 | 2.5 | 36 | Copolymer (E) | 10 | 0.5-4 | 4.9 | ○ | 72 |
| " 7 | 0.50 | 36 | " | 4.2 | 24 | " (F) | 40 | 0.3-2 | 6.1 | ○ | 42 |
| " 8 | 0.40 | 24 | " | 2.5 | 56 | " (F) | 20 | 0.5-3 | 4.9 | ○ | 123 |
| " 9 | 0.50 | 36 | " | 2.5 | 24 | " (F) | 40 | 0.3-2 | 5.5 | ○ | 70 |
| " 10 | 0.50 | 24 | Nylon-6,6 | 2.8 | 16 | " (E) | 60 | 0.3-3 | 3.5 | ○ | 101 |
| Comparative Example 3 | 0.50 | 60 | Nylon-6 | 2.5 | 40 | - | - | 2-6 | 3.5 | ○ | 61 |
| " 4 | 0.50 | 30 | " | 2.5 | 70 | - | - | 2-6 | 3.8 | ○ | 115 |
| " 5 | 0.50 | 60 | Nylon-6,6 | 2.8 | 40 | - | - | 2-8 | 3.1 | ○ | 70 |

*) EX-PPE/PA; Polymer obtained by melt-kneading terminal epoxidized polyphenylene ether and polyamide and then extracting away unreacted raw materials

**) ○; Surface state unchanged

While the invention has been described in detail and with reference to specific embodiments thereof, it will be apparent to one skilled in the art that various changes and modifications can be made therein without departing from the spirit and scope thereof.

## Claims

1. A resin composition containing a polyphenylene ether•polyamide copolymer obtained by reacting a polyphenylene ether having epoxy group and a polyamide.

2. The resin composition as claimed in claim 1, wherein the polyphenylene ether having epoxy group is prepared by epoxidizing the hydroxy group at the terminal or terminals of a polyphenylene ether.

3. The resin composition as claimed in claim 1, wherein the polyphenylene ether having epoxy group and the polyamide are reacted at a ratio that amino groups of free groups existing in the polyamide is in the range of from 0.5 mol to 1.5 mol per mol of the epoxy group of the polyphenylene ether.

4. The resin composition as claimed in claim 3, wherein the amino groups of free groups existing in the polyamide is in the range of from 0.8 mol to 1.2 mol per mol of the epoxy group of the polyphenylene ether.

5. The resin composition as claimed in claim 1, wherein the polyphenylene ether having epoxy group is a polymer obtained by reacting a polyphenylene ether having an intrinsic viscosity, measured at 30°C using chloroform as solvent, of from 0.10 to 0.60 and a compound having epoxy group.

6. The resin composition as claimed in claim 5, wherein the intrinsic viscosity of the polyphenylene ether is from 0.20 to 0.57.

7. The resin composition as claimed in claim 5, wherein the intrinsic viscosity of the polyphenylene ether is from 0.25 to 0.55.

8. The resin composition as claimed in claim 1, wherein the polyamide has a relative viscosity, measured using 98% sulfuric acid regulated by JIS K-6810, of from 1.5 to 6.5.

9. The resin composition as claimed in claim 8, wherein the relative viscosity of the polyamide is from 1.8 to 6.0.

10. The resin composition as claimed in claim 8, wherein the relative viscosity of the polyamide is from 2.0 to 5.5.

11. A resin composition comprising 2 to 80 parts by weight of a polyphenylene ether•polyamide copolymer, 10 to 80 parts by weight of a polyphenylene ether and/or a polyphenylene ether having epoxy group, and 10 to 80 parts by weight of a polyamide, each per 100 parts by weight of the total amount of the polyphenylene ether•polyamide copolymer, the polyphenylene ether and/or the polyphenylene ether having epoxy group and the polyamide.

12. The resin composition as claimed in claim 11, wherein the resin composition is obtained by kneading 5 to 75 parts by weight of the polyphenylene ether•polyamide copolymer, 15 to 75 parts by weight of the polyphenylene ether and/or the polyphenylene ether having epoxy group, and 15 to 75 parts by weight of the polyamide, each per 100 parts by weight of the total amount of the polyphenylene ether•polyamide copolymer, the polyphenylene ether and/or the polyphenylene ether having epoxy group and the polyamide.

13. The resin composition as claimed in claim 11, wherein the resin composition is obtained by kneading 8 to 70 parts by weight of the polyphenylene ether•polyamide copolymer, 20 to 70 parts by weight of the polyphenylene ether and/or the polyphenylene ether having epoxy group, and 20 to 70 parts by weight of the polyamide, each per 100 parts by weight of the total amount of the polyphenylene ether•polyamide copolymer, the polyphenylene ether and/or the polyphenylene ether having epoxy group and the polyamide.

14. The resin composition as claimed in claim 11, wherein the resin composition is obtained by kneading the polyphenylene ether polyamide copolymer, the polyphenylene ether and/or the polyphenylene ether having epoxy group, and the polyamide at 240°C to 350°C.

15. The resin composition as claimed in claim 11, wherein the polyphenylene ether being compounded has an intrinsic viscosity, measured at 30°C using chloroform as solvent, of from 0.15 to 0.65.

16. The resin composition as claimed in claim 15, wherein the intrinsic viscosity of the polyphenylene ether is from 0.30 to 0.60.

17. The resin composition as claimed in claim 11, wherein the polyamide being compounded has a relative viscosity, measured using 98% sulfuric acid regulated by JIS K-6810, of from 1.5 to 6.5.

18. The resin composition as claimed in claim 17, wherein the relative viscosity of the polyamide is from 1.8 to 6.0.

19. The resin composition as claimed in claim 17, wherein the relative viscosity of the polyamide is from 2.0 to 5.5.

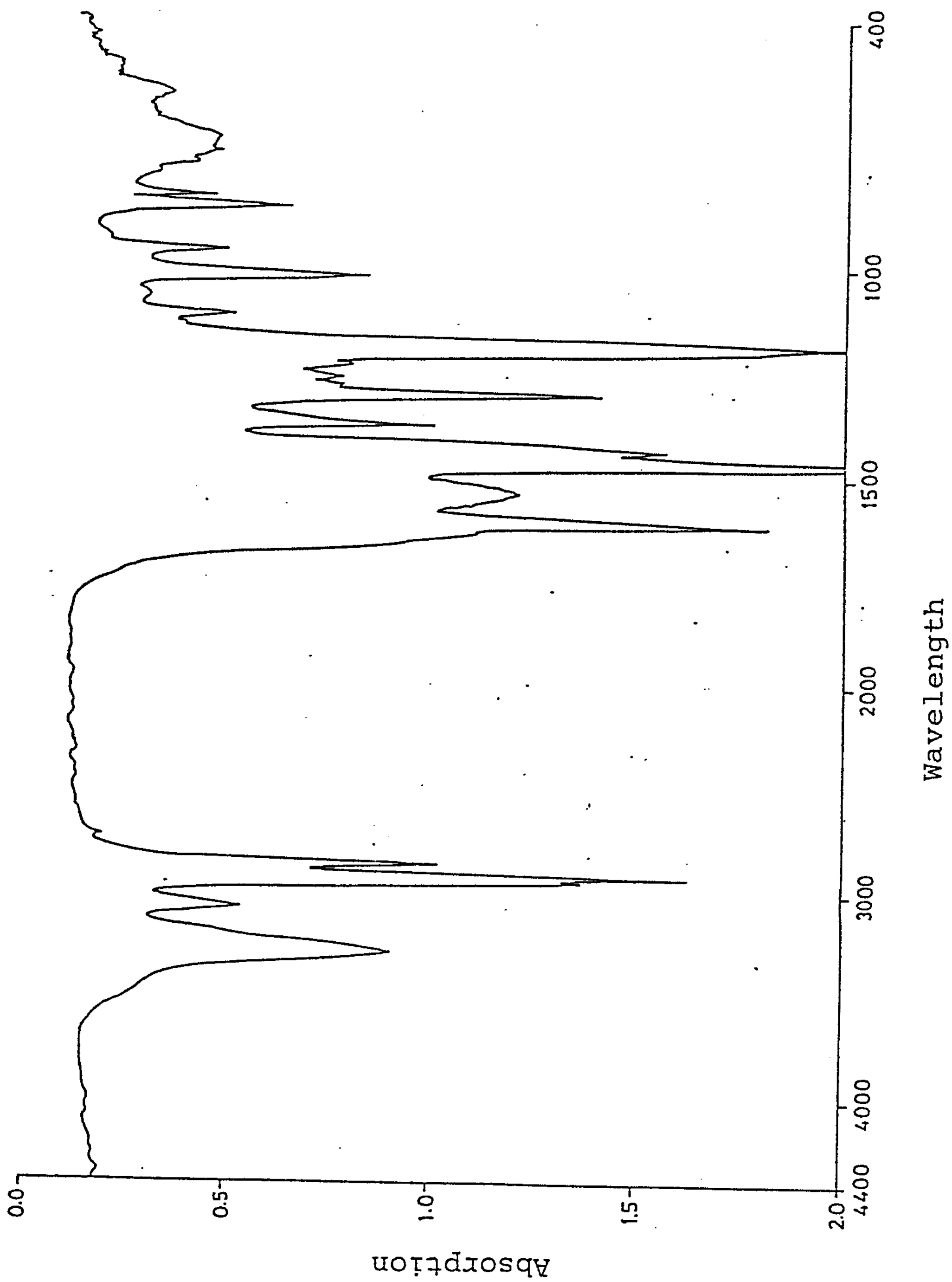
Absorption
0.0
0.5
1.0
1.5
2.0
Wavelength
4400
4000
3000
2000
1500
1000
400